# EUROPÄISCHE PATENTSCHRIFT

(11) **EP 2 578 079 B1**
(45) Veröffentlichungstag und Bekanntmachung des Hinweises auf die Patenterteilung: **13.12.2017**
(21) Anmeldenummer: 12187054.7
(22) Anmeldetag: 02.10.2012
(51) Int. Cl.: A01K 27/00

(54) **Griff zum Ergreifen mit einer Hand und eine Leineneinrichtung mit einem solchen Griff**
Handle for gripping with one hand and a leash device with such a handle
Poignée de serrage d'une main et un dispositif à laisse équipé d'une telle poignée

(30) Priorität: 04.10.2011 DE 102011114640
(43) Veröffentlichungstag der Anmeldung: 10.04.2013
(73) Patentinhaber: Flexi-Bogdahn Technik GmbH & Co. KG, 22941 Bargteheide (DE)
(72) Erfinder: Bogdahn, Manfred, 22391 Hamburg (DE); Schmidt, Michael, 80687 München (DE)
(74) Vertreter: Tappe, Udo

(56) Entgegenhaltungen:
- DE-U1- 29 904 882
- US-A1- 2007 006 821
- US-A1- 2011 083 617

## Beschreibung

Die Erfindung betrifft einen Griff zum Ergreifen mit einer Hand, insbesondere zum Halten einer Leineneinrichtung zum Aufrollen und Abrollen einer Leine zum Führen eines Tieres, mit einem starren Greifteil.

Ein derartiger Griff ist beispielsweise aus der DE 299 04 882 U1 bekannt. Hierbei ist der Griff als ein integraler Bestandteil eines Gehäuses für eine Leineneinrichtung ausgebildet. Die Leineneinrichtung weist eine auf- und abrollbare Leine zum Führen eines Tieres, wie beispielsweise eines Hundes oder einer Katze, auf. Mittels des Griffes ist die Leineneinrichtung mit einer einzelnen Hand tragbar.

Hierbei ist von Nachteil, dass die Länge des starren Greifteils fest vorgegeben ist. Hierdurch ist es notwendig, ein möglichst universal, nämlich für möglichst viele unterschiedliche Handgrößen und/oder Handbreiten, einsetzbares Greifteil vorzusehen. Hierbei besteht jedoch die Gefahr, dass der Tragekomfort, insbesondere für Personen mit einer kleineren Handgröße und/oder Handbreite, unzureichend ist. Alternativ ist es auch denkbar, mehrere verschiedene Griffe mit unterschiedlichen Längen für das Greifteil für unterschiedliche Handgrößen und/oder Handbreiten vorzusehen. Hierdurch erhöht sich jedoch der Herstellungs- und Bevorratungsaufwand erheblich.

Aus der US 2011/0083617 A1 ist eine Leineneinrichtung bekannt, bei der ein Ende eines Griffstückes von einem Leinengehäuse lösbar ist, um die Leineneinrichtung beispielsweise an einem Pfosten befestigen zu können. Hierzu ist das von dem lösbaren Ende abgewandte Ende des Griffstückes drehbar gelagert, wodurch ein kontrolliertes Führen der Leineneinrichtung bei einem gelösten Griffstück erheblich erschwert ist.

Es ist daher das der Erfindung zugrunde liegende Problem, einen Griff der eingangs genannten Art derart weiterzuentwickeln, dass der Griff einen hohen Tragekomfort für Personen mit unterschiedlichen Handgrößen und/oder Handbreiten ermöglicht.
Zur Lösung des der Erfindung zugrunde liegenden Problems ist der Griff der eingangs genannten Art dadurch gekennzeichnet, dass eine verstellbare Grifflängenbegrenzung zum Einstellen einer Grifflänge für unterschiedliche Handbreiten vorgesehen ist und dass ein mit dem Greifteil verbundener, einstückig mit Greifteil ausgebildeter Griffbügel vorgesehen ist, wobei der Griffbügel und das Greifteil eine Grifföffnung zum mindestens teilweisen Durchführen von Fingern bilden, und die Grifflängenbegrenzung innerhalb der Grifföffnung angeordnet ist.
Hierbei ist von Vorteil, dass derselbe Griff für Personen mit unterschiedlichen Handgrößen und/oder Handbreiten einstellbar ist. Somit ist für jede Handgröße und/oder Handbreite eine Griffgrößenstellung realisierbar, die mit einem hinreichend hohen Tragekomfort verbunden ist. Hierbei ist der Griff aufgrund des starren Greifteils weiterhin stabil und erlaubt einen sicheren Halt. Aufgrund der zusätzlichen verstellbaren Grifflängenbegrenzung ist die Grifflänge einstellbar. Vorzugsweise ist die Grifflänge mittels der Grifflängenbegrenzung in einem Bereich des Greifteils verstellbar, der im Gebrauch einer Handkante und/oder einem kleinen Finger der Hand zugeordnet ist. Aufgrund der Verstellbarkeit der Grifflängenbegrenzung ist hierdurch gewährleistbar, dass eine Griffgrößenstellung realisierbar ist, in der die Handkante und/oder der kleine Finger an der Grifflängenbegrenzung anlegbar ist. Hierdurch ist ein sicherer Halt des Griffes und/oder des Greifteils ermöglicht. Unter einem kleinen Finger ist vorliegend der Finger zwischen einem Ringfinger und einer Handkante zu verstehen. Vorzugsweise ist die Grifflängenbegrenzung in der jeweiligen Griffgrößenstellung, insbesondere mittels einer Festsetzeinrichtung, festsetzbar.
Nach einer weiteren Ausführungsform ist die Grifflängenbegrenzung in Längsrichtung des Greifteils mittels eines Verstellmechanismus verstellbar und/oder positionierbar. Mittels des Verstellmechanismus kann eine kontinuierliche und/oder diskontinuierliche Verstellbarkeit und/oder Positionierbarkeit der Grifflängenbegrenzung, insbesondere zwischen zwei Anschlägen, ermöglicht sein. Somit sind diskrete vorgegebene Griffgrößenstellungen oder kontinuierlich veränderbare Griffgrößenstellungen realisierbar. Der Verstellmechanismus kann mechanisch, elektrisch und/oder elektromechanisch ausgebildet sein. Vorzugsweise ist die Grifflängenbegrenzung U-förmig ausgebildet. Insbesondere hat der Greifteil eine Handflächengreifseite zum mindestens teilweisen Anlegen einer Handinnenfläche und eine Fingergreifseite zum mindestens teilweisen Anlegen von Fingerinnenflächen. Hierdurch ist ein sicherer Halt des starren Greifteils in der Hand beim Gebrauch des Griffs erreichbar.

Insbesondere ist die Grifflängenbegrenzung zum mindestens teilweisen Umgreifen eines kleinen Fingers und/oder einer Handkante an dem Greifteil angeordnet. Hierdurch ist ein noch sicherer Halt des Griffs bzw. des Greifteils in der Hand gewährleistbar. Insbesondere bei einer Leineneinrichtung, die im Gebrauch, beispielsweise beim Führen eines Tieres, auf Zug belastet wird, liegt der Griff hierdurch sicher in der Hand. Es ist ein mit dem Greifteil verbundener, einstückig mit dem Greifteil ausgebildeter, Griffbügel vorgesehen. Insbesondere ist der Griffbügel starr ausgebildet. Vorzugsweise sind der Griffbügel und/oder das Greifteil als einstückige Bestandteile eines Gehäuses einer Leineneinrichtung ausgebildet. Insbesondere ist der Griffbügel einer Fingergreifseite des Greifteils zugewandt. Hierdurch sind die Finger, insbesondere die Fingeraußenseiten, geschützt. In einem von der Fingergreifseite abgewandten Bereich des Griffbügels kann ein Gehäuseteil für eine Leinenrolle angeordnet sein. Im Gebrauch ist die Leine bzw. die Leinenrolle ausgehend von einer den Griff haltenden Person vor der Hand positioniert. Hierdurch ergibt sich eine gute Funktionalität der Leineneinrichtung mit einem gleichzeitig hohen Tragekomfort.
Insbesondere bilden der Griffbügel und das Greifteil eine Grifföffnung zum mindestens teilweisen Durchführen von Fingern. Vorzugsweise ist die Grifföffnung von dem Griffbügel und dem Greifteil umschlossen. Hierdurch ergibt sich eine besonders stabile Konstruktion. Insbesondere ist die Grifflängenbegrenzung innerhalb der Grifföffnung angeordnet. Die maximale Griffgrößenstellung kann durch die Größe der Grifföffnung vorgegeben sein. Mittels der verstellbaren Grifflängenbegrenzung sind im Vergleich zur maximalen Griffgrößenstellung kleinere Griffgrößenstellungen realisierbar. Hierzu ist die Grifflängenbegrenzung vorzugsweise innerhalb der Grifföffnung verstellbar.
Nach einer weiteren Ausführungsform ist die Grifflängenbegrenzung in einer maximalen Griffgrößenstellung mindestens teilweise in das Greifteil und/oder in den Griffbügel integriert. Hierdurch sind ästhetisch besonders ansprechende Gestaltungen realisierbar. Zudem ist eine Verkleinerung der maximalen Griffgrößenstellung durch das Vorsehen der Grifflängenbegrenzung vermeidbar. Vorzugsweise ist die Grifflängenbegrenzung zum Verkleinern der Griffgrößenstellung in Längsrichtung des Greifteils verstellbar. Hierdurch ist die Grifflänge für unterschiedliche Handbreiten effektiv und einfach einstellbar.
Vorzugsweise ist der Verstellmechanismus als ein Verschiebemechanismus und/oder als ein Verschwenkmechanismus ausgebildet. Bei einem Verschiebemechanismus ist die Grifflängenbegrenzung, insbesondere in Längsrichtung des Greifteils, verschiebbar. Bei einem Verschwenkmechanismus ist die Grifflängenbegrenzung verschwenkbar. Insbesondere ist der Verstellmechanismus als eine Kombination aus einem Verschiebe- und einem Verschwenkmechanismus ausgebildet. Hierbei ist die Grifflängenbegrenzung sowohl verschiebbar als auch verschwenkbar. Die Verschwenkung und die Verschiebung können unabhängig voneinander oder gleichzeitig miteinander erfolgen. Hierdurch ist eine Vielzahl von Verstellmechanismen realisierbar. Vorzugsweise ist bei einem Verschwenkmechanismus eine, insbesondere dem Greifteil oder dem Griffbügel zugeordnete und/oder mit dem Verschiebemechanismus verschiebbare, Schwenkachse zum Verschwenken der Grifflängenbegrenzung vorgesehen. Die Schwenkachse kann materiell ausgebildet sein oder als eine virtuelle Schwenkachse vorgesehen sein, um die die Grifflängenbegrenzung verschwenkbar ist.

Gemäß einer Weiterbildung ist ein Betätigungselement zum Betätigen des Verstellmechanismus vorgesehen. Das Betätigungselement kann als eine Taste, ein Drehrad oder ein Rändelrad ausgebildet sein. Vorzugsweise ist das Betätigungselement dem Greifteil, dem Griffbügel oder der Grifflängenbegrenzung zugeordnet. Insbesondere ist das Betätigungsmittel zum Betätigen mit mindestens einem Finger der Hand während des Haltens des Griffes mit der Hand vorgesehen und entsprechend positioniert. Vorzugsweise ist das Betätigungselement zum Betätigen mit dem Daumen der Hand ausgebildet, die den Griff bzw. das Greifteil im Gebrauch hält. Hierdurch ist eine einfache, bequeme und schnelle Bedienbarkeit und/oder Einstellbarkeit der Griffgröße ermöglicht.

Nach einer weiteren Ausführungsform weisen der Verschiebemechanismus und/oder der Verschwenkmechanismus einen Getriebemechanismus, Rastmechanismus und/oder einen Klippmechanismus auf. Hierdurch ist eine Vielzahl unterschiedlicher Verstellmechanismen realisierbar. Vorzugsweise sind bei einem Rastmechanismus erste Rastelemente und/oder eine Rastleiste im Bereich des Greifteils und/oder des Griffbügels angeordnet, die insbesondere mit mindestens einem zweiten Rastelement und/oder Rastteilen der Grifflängenbegrenzung zusammenwirken. Mittels eines solchen Rastmechanismus sind vorgegebene Griffgrößenstellungen einstellbar.

Vorzugsweise weist der Verschiebemechanismus eine in dem Greifteil oder in dem Griffbügel angeordnete Spindel auf. Die Spindel ist insbesondere drehbar innerhalb des Greifteils oder des Griffbügels gelagert. Vorzugsweise ist die Spindel hinsichtlich ihrer Längsausrichtung in, insbesondere parallel zur, Längsausrichtung des Greifteils oder des Griffbügels ausgerichtet. Die Spindel kann mittels eines Betätigungselementes, insbesondere eines Drehrades, zum Verstellen der mit der Spindel zusammenwirkenden Grifflängenbegrenzung betätigbar sein. Hierbei kann das Betätigungselement mit der Spindel verbunden sein. Vorzugsweise ist das Betätigungselement als ein Rändelrad ausgebildet, das mit einem Ende der Spindel fest verbunden ist. Hierbei kann die Lage einer Drehachse des Rändelrades mit der Lage einer Drehachse der Spindel identisch sein. Eine Umfangsfläche des Rändelrades kann mindestens teilweise im Bereich der Fingergreifseite, der Handflächengreifseite und/oder eine Seitenfläche des starren Greifteils zum Betätigen des Betätigungselementes frei zugänglich sein.

Vorzugsweise hat die Grifflängenbegrenzung eine Spindelmutter, die mit der Spindel zusammenwirkt. Bei einer Betätigung des Betätigungselementes wird die Spindel in eine Drehung versetzt. Hierdurch bewegt sich die drehfest in dem Greifteil oder dem Griffbügel angeordnete Spindelmutter in Längsrichtung der Spindel, wodurch die Grifflängenbegrenzung verstellt wird.

Von besonderem Vorteil ist eine Leineneinrichtung zum Aufrollen und Abrollen einer Leine, insbesondere zum Führen eines Tieres, mit einem erfindungsgemäßen Griff. Vorzugsweise ist der Griff in einem Gehäuse der Leineneinrichtung integriert. Somit dient der Griff zum Tragen der Leineneinrichtung. Die Leineneinrichtung kann eine in das Gehäuse eingebaute Seilrolle mit einer auf- und abrollbaren Leine aufweisen. Die Leine kann als ein Seil und/oder als ein Gurt ausgebildet sein. Mittels einer Gehäuseöffnung kann die Leine aus dem Gehäuse nach außen geführt sein. Vorzugsweise ist eine Bremseinrichtung, insbesondere eine Bremstaste, vorgesehen. Mittels der Bremseinrichtung ist die Abroll- und/oder Aufrollbewegung der Leinenrolle stoppbar. Hierdurch kann eine von der maximalen Leinenlänge abweichende kürzere Leinenteillänge festgesetzt werden. Weiter kann ein Rückholmechanismus, insbesondere eine Rückholfeder, vorgesehen sein, um die Leine auf die Leinenrolle selbsttätig aufzurollen.

Nachfolgend wird die Erfindung anhand der Figuren näher erläutert. Es zeigen:
- Fig. 1a bis 1d: geschnittene Seitendarstellungen eines ersten erfindungsgemäßen Griffs mit unterschiedlichen Griffgrößenstellungen einer Grifflängenbegrenzung,
- Fig. 1e: geschnittene Seitendarstellungen des ersten erfindungsgemäßen Griffs mit zusätzlichen weiteren Rastelementen,
- Fig. 2a und 2b: geschnittene Seitendarstellungen eines zweiten erfindungsgemäßen Griffs mit unterschiedlichen Griffgrößenstellungen einer Grifflängenbegrenzung,
- Fig. 3a und 3b: geschnittene Seitendarstellungen eines dritten erfindungsgemäßen Griffs mit unterschiedlichen Griffgrößenstellungen einer Grifflängenbegrenzung,
- Fig. 4a und 4b: geschnittene Seitendarstellungen eines vierten erfindungsgemäßen Griffs mit unterschiedlichen Griffgrößenstellungen einer Grifflängenbegrenzung,
- Fig. 5a und 5b: geschnittene Seitendarstellungen eines fünften erfindungsgemäßen Griffs mit unterschiedlichen Griffgrößenstellungen einer Grifflängenbegrenzung,
- Fig. 6a und 6b: geschnittene Seitendarstellungen eines sechsten erfindungsgemäßen Griffs mit unterschiedlichen Griffgrößenstellungen einer Grifflängenbegrenzung,
- Fig. 7a und 7b: geschnittene Seitendarstellungen eines siebten erfindungsgemäßen Griffs mit unterschiedlichen Griffgrößenstellungen einer Grifflängenbegrenzung,
- Fig. 7c: eine perspektivische Seitendarstellung der Grifflängenbegrenzung gemäß Fig. 7a und 7b,
- Fig. 8a und 8b: geschnittene Seitendarstellungen eines achten erfindungsgemäßen Griffs mit unterschiedlichen Griffgrößenstellungen einer Grifflängenbegrenzung, und
- Fig. 9a und 9b: geschnittene Seitendarstellungen eines weiteren erfindungsgemäßen Griffs mit unterschiedlichen Griffgrößenstellungen einer Grifflängenbegrenzung.

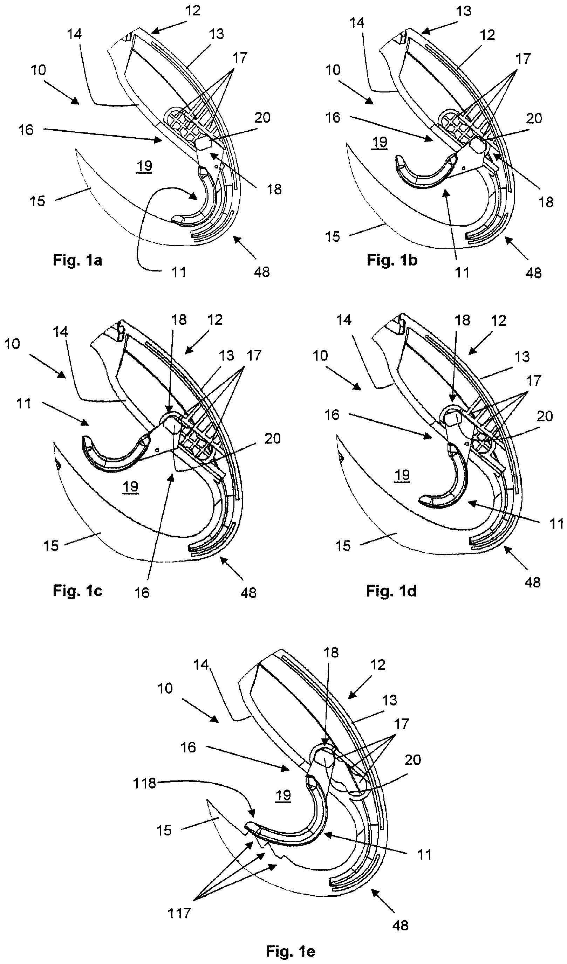

Fig. 1a bis 1e zeigen geschnittene Seitendarstellungen eines ersten erfindungsgemäßen Griffs 10 mit unterschiedlichen Griffgrößenstellungen einer Grifflängenbegrenzung 11. Der Griff 10 ist integraler Bestandteil eines hier nicht näher dargestellten Gehäuses einer Leineneinrichtung. Der Griff 10 weist ein starres Greifteil 12 auf, das zum Ergreifen mit einer einzelnen hier nicht näher dargestellten Hand vorgesehen ist.

Das starre Greifteil 12 weist eine Handflächengreifseite 13 und eine von der Handflächengreifseite 13 abgewandt angeordnete Fingergreifseite 14 auf. Im Gebrauch des Griffes 10 wird das Greifteil 12 derart ergriffen, dass eine Handinnenfläche der Hand mindestens teilweise an der Handflächengreifseite 13 anliegt. Des Weiteren liegen im Gebrauch des Griffes 10 Fingerinnenflächen mindestens teilweise an der Fingergreifseite 14 an. Das Greifteil 10 ist zum Ergreifen mit einer einzelnen Hand ergonomisch geformt.

Des Weiteren ist ein Griffbügel 15 vorgesehen. Der Griffbügel 15 ist einstückig mit dem Greifteil 12 ausgebildet und der Fingergreifseite 14 zugewandt. Im Gebrauch sind Fingeraußenseiten dem Griffbügel 15 zugewandt. Der Griffbügel 15 und das Greifteil 12 bilden eine Grifföffnung 19 zum mindestens teilweisen Einführen und/oder Durchführen von Fingern zum Ergreifen des Griffes 10.

Der Griff 10 hat einen Verstellmechanismus 16 zum Verstellen der Grifflängenbegrenzung 11. Die Grifflängenbegrenzung 11 ist im Wesentlichen U-förmig ausgebildet. Des Weiteren ist die Grifflängenbegrenzung 11 bei dem hier gezeigten Ausführungsbeispiel starr ausgebildet. Weiter ist die Grifflängenbegrenzung 11 zum mindestens teilweisen Umgreifen eines kleinen Fingers und/oder einer Handkante am Greifteil 12 angeordnet. Mittels des Verstellmechanismus 16 ist die Grifflängenbegrenzung 11 zum Einstellen einer Grifflänge für unterschiedliche Handbreiten verstellbar.

Bei dem hier gezeigten Ausführungsbeispiel ist der Verstellmechanismus 16 in das Greifteil 12 integriert und zugleich als ein Verschiebemechanismus und als ein Verschwenkmechanismus ausgebildet. Zum Verschieben der Grifflängenbegrenzung 11 in Längsrichtung des Greifteils 12 sind erste Rastelemente 17 vorgesehen. Bei dem hier gezeigten Ausführungsbeispiel sind drei erste Rastelemente 17 vorgesehen, die drei verschiedene Verschiebestellungen ermöglichen. Die ersten Rastelemente 17 sind integraler Bestandteil des Greifteils 12.

Die Grifflängenbegrenzung 11 hat ein zweites Rastelement 18, das mit jeweils einem der ersten Rastelemente 17 zusammenwirkt. Das zweite Rastelement 18 ist zusammen mit der Grifflängenbegrenzung 11 in jeweils eine der drei ersten Rastelemente 17 verschiebbar bzw. einrastbar.

Bei dem hier gezeigten Ausführungsbeispiel weist das zweite Rastelement 18 eine Schwenkachse 20 auf. Mittels der Schwenkachse 20 ist die Grifflängenbegrenzung 11 in dem hier gezeigten Beispiel in zwei verschiedene Schwenkstellungen einrastbar. Alternativ sind auch mehr als zwei Schwenkstellungen denkbar, insbesondere zwischen zwei und zehn Schwenkstellungen. Zum Verschwenken der Grifflängenbegrenzung 11 ist diese in dem hier gezeigten Ausführungsbeispiel um etwa 45° zwischen den beiden Schwenkstellungen um die Schwenkachse 20 verschwenkbar. Die Schwenkachse 20 ist quer, hier insbesondere rechtwinklig, zu einer Ebene ausgerichtet, die durch die Längsausrichtung des Greifteils 12 und der Grifflängenbegrenzung 11 aufgespannt ist.

Aufgrund der drei Verschiebestellungen und der zwei Schwenkstellungen sind bei den Ausführungen gemäß Fig. 1a bis 1d jeweils insgesamt sechs Griffgrößenstellungen möglich.

Fig. 1 a ist eine maximale Griffgrößenstellung zu entnehmen, in der die Grifflängenbegrenzung 11 teilweise in einem U-förmig ausgebildeten Übergangsbereich 48 vom Greifteil 12 zum Greifbügel 15 integriert ist. Dieser Übergangsbereich 48 ist im Gebrauch einer Handkante und/oder einem kleinen Finger der den Griff 10 bzw. das Greifteil 12 haltenden Hand zugeordnet.

Die Griffgrößenstellung von Fig. 1b unterscheidet sich von der gemäß Fig. 1 a dadurch, dass die Grifflängenbegrenzung 11 um etwa 45° zum Verkleinern einer Grifflänge für eine kleinere Handbreite in Richtung der Fingergreifseite 14 um die Schwenkachse 20 verschwenkt ist.

Zum Erreichen einer minimalen Griffgrößenstellung ist die Grifflängenbegrenzung aus der Griffgrößenstellung gemäß Fig. 1b in eine Griffgrößenstellung gemäß Fig. 1 c verschiebbar.

In der Griffgrößenstellung gemäß Fig. 1d ist die Grifflängenbegrenzung aus der Griffgrößenstellung gemäß Fig. 1c um etwa 45° um die Schwenkachse 20 von der Fingergreifseite 14 weg verschwenkt.

Die Griffgrößenstellung gemäß Fig. 1e entspricht der nach Fig. 1d. Im Unterschied zu den Fig. 1a bis 1d sind jedoch nach Fig. 1e weitere erste Rastelemente 117 vorgesehen, die dem Griffbügel 15 zugeordnet sind. Weiter hat die Grifflängenbegrenzung 11 nach Fig. 1e ein weiteres zweites Rastelement 118. Dieses weitere zweite Rastelement 118 ist einem freien Ende der Grifflängenbegrenzung 11 zugeordnet und wirkt mit jeweils einem der weiteren ersten Rastelemente 117 zusammen. Hierdurch wird eine besonders stabile Positionierung der Grifflängenbegrenzung 11 ermöglicht. Weiter ist hier ein Verstellmechanismus 116 vorgesehen, der bei dem hier gezeigten Ausführungsbeispiel als ein reiner Verschiebemechanismus ausgebildet ist. Somit sind nach der Ausführung gemäß Fig. 1e insgesamt drei Griffgrößenstellungen realisierbar. Alternativ kann der Verstellmechanismus 116 gemäß dem Verstellmechanismus 16 zugleich als ein Verschiebe- und ein Verschwenkmechanismus ausgebildet sein. Hierdurch können insgesamt 6 Griffgrößenstellungen realisierbar sein.

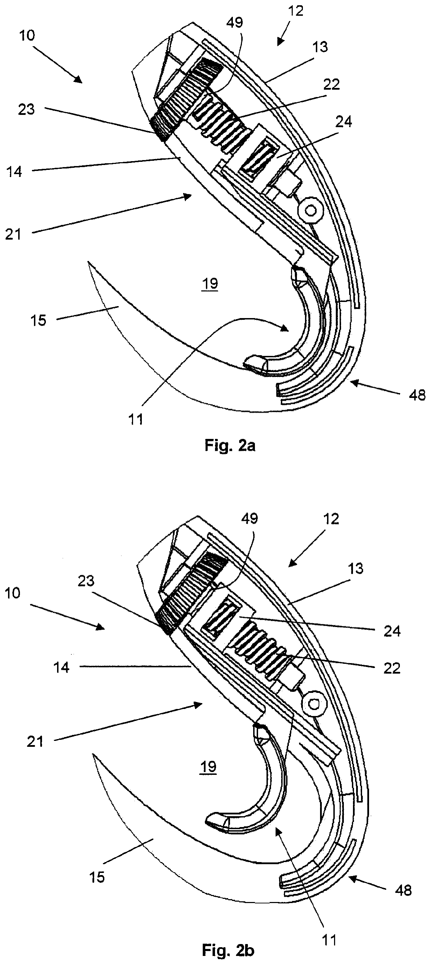

Fig. 2a und 2b zeigen geschnittene Seitendarstellungen eines zweiten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Zum diskontinuierlichen Verstellen der Grifflängenbegrenzung 11, die hier ebenfalls starr ausgebildet ist, ist ein Verstellmechanismus 21 vorgesehen, der in dem hier gezeigten Ausführungsbeispiel als ein Verschiebemechanismus zum Verschieben der Grifflängenbegrenzung in Längsrichtung des Greifteils 12 ausgebildet ist.

Der Verstellmechanismus 21 ist in das Greifteil 12 integriert und weist eine Spindel 22 auf. Die Spindel 22 ist hinsichtlich ihrer Längsachse in Richtung, nämlich etwa parallel zur Längsachse des Greifteils 12 ausgerichtet. Die Spindel 22 ist mit einem Betätigungselement 23 fest verbunden, das hier als ein Drehrad bzw. ein Rändelrad ausgebildet ist. Eine Drehachse des Betätigungselementes 23 ist parallel zur Längsachse der Spindel 22 ausgerichtet. Das Betätigungselement 23 ist hier an einem von der Grifflängenbegrenzung abgewandten Ende an der Spindel 22 angeordnet. Hierbei ist das Betätigungselement 23 derart in das Greifteil 12 integriert, dass in dem hier gezeigten Ausführungsbeispiel eine Betätigungsfläche des Bedienelementes 23, hier eine Umfangsfläche des Rändelrades, mindestens teilweise im Bereich der Fingergreifseite 14 frei zugänglich ist. In dem hier gezeigten Beispiel verläuft die Betätigungsfläche bündig mit der Fingergreifseite 14. Somit ist das Bedienelement 23 im Gebrauch bequem mittels eines Fingers, insbesondere eines Zeigefingers oder Mittelfingers, betätigbar. Alternativ oder zusätzlich kann die Betätigungsfläche auch an einer Seitenfläche und/oder der Handflächengreifseite 15 des Greifteils 12, beispielsweise zum Betätigen mit einem Daumen, mindestens teilweise frei zugänglich sein.

Der Grifflängenbegrenzung 11 ist eine Spindelmutter 24 zugeordnet, die drehfest in dem Greifteil 12 geführt ist. Durch eine Betätigung des Bedienelementes 23 und ein Drehen der Spindel 22 ist die Spindelmutter 24 und die damit verbundene Grifflängenbegrenzung 11 in Längsrichtung der Spindel 22 bzw. des Greifteils 12 verschiebbar.

Hierbei ist die Verschiebung in Richtung des Bedienelementes 23 mittels eines Anschlags 49 begrenzt. Der Anschlag 49 weist eine ebene Fläche auf, an die eine ebene Fläche der Spindelmutter 24 anschlagen kann. Aufgrund der ebenen Flächen des Anschlags 49 und der Spindelmutter 24 wird ein unerwünschter Materialverschleiß vermieden.

Es sind unterschiedliche Griffgrößenstellungen zum Einstellen der Griffgröße für unterschiedliche Handbreiten realisierbar.

So ist der Fig. 2a eine maximale Griffgrößenstellung zu entnehmen, in der die Griffgrößenbegrenzung 11 mindestens teilweise in einem Übergangsbereich 48 vom Greifteil 12 zum Griffbügel 15 integriert ist. Dieser Übergangsbereich 48 ist im Gebrauch einer Handkante und/oder einem kleinen Finger der den Griff 10 bzw. das Greifteil 12 haltenden Hand zugeordnet. In dieser Stellung schlägt die Spindelmutter 24 im Bereich eines vom Betätigungselement 23 abgewandten Endes der Spindel 22 an einer Innenseite des Übergangsbereichs 48 an.

Fig. 2b ist eine minimale Griffgrößenstellung zu entnehmen, bei der die Spindelmutter 24 an dem Anschlag 49 im Bereich eines dem Betätigungselement 23 zugewandten Endes der Spindel 22 anschlägt.

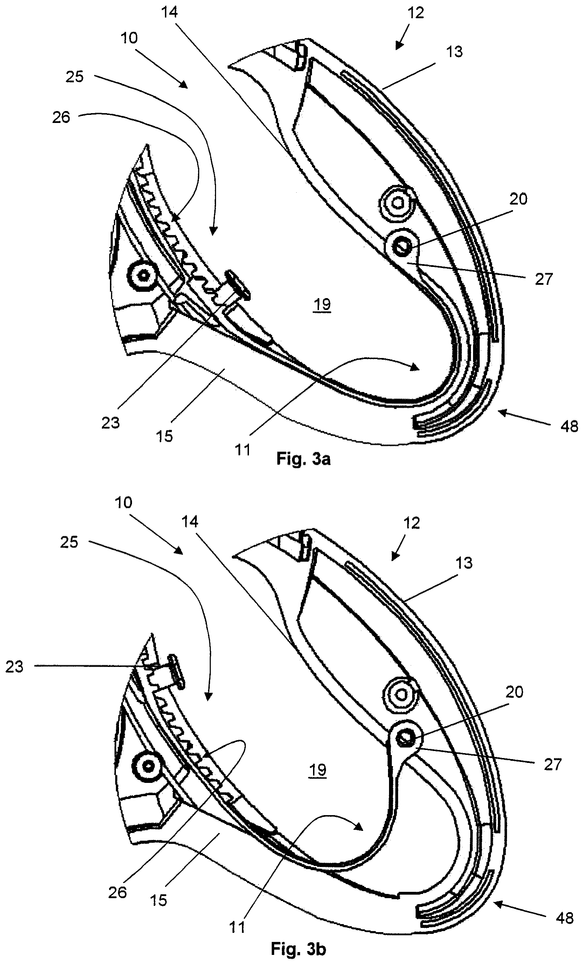

Fig. 3a und 3b zeigen geschnittene Seitendarstellungen eines dritten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

In dem hier gezeigten Ausführungsbeispiel ist die Grifflängenbegrenzung 11 flexibel ausgebildet. Ein erstes Ende der Grifflängenbegrenzung 11 ist dem Greifteil 12 zugeordnet. Hierbei ist die Grifflängenbegrenzung 11 um eine dem Greifteil 12 zugeordnete Schwenkachse 20 verschwenkbar. Zur Befestigung der Grifflängenbegrenzung 11 an der Schwenkachse 20 hat die Grifflängenbegrenzung 11 eine Öse 27.

Ein von dem ersten Ende der Grifflängenbegrenzung 11 abgewandtes zweites Ende ist dem Griffbügel 15 zugeordnet und in diesen eingeführt. Innerhalb des Griffbügels 15 ist ein Verstellmechanismus 25 angeordnet. Der Verstellmechanismus 25 hat ein Betätigungselement 23, das hier als ein Druckknopf ausgebildet ist. Das Betätigungselement 23 tritt aus dem Griffbügel 15 in Richtung der Fingergreifseite 14 hervor.

Das zweite Ende der Grifflängenbegrenzung 11 ist mit dem Betätigungselement 23 verbunden. Weiter ist das Betätigungselement 23 in Richtung des Griffbügels 15 gegen die Kraft eines hier nicht näher dargestellten Rückstellelementes hineindrückbar. Das Betätigungselement 23 greift in einem nicht herunter gedrückten Zustand in eine fest mit dem Griffbügel 15 verbundene Zahnreihe 26 ein. Hierdurch ist eine Rastverbindung realisiert. Bei einer Betätigung des Bedienelementes 23, nämlich einem herunter Drücken des Betätigungselementes 23 in Richtung des Griffbügels 15, wird die Verbindung zwischen dem Betätigungselement 23 und der Zahnreihe 26 gelöst. Sodann ist das Betätigungselement 23 zusammen mit dem zweiten Ende der Grifflängenbegrenzung 11 im Wesentlichen parallel zur bzw. in Richtung der Längsausrichtung des Griffbügels 15 oder des Greifteils 12 kontinuierlich verschiebbar. Sobald das Betätigungselement 23 losgelassen wird bewegt sich das Betätigungselement 23 selbsttätig in Richtung des Greifteils 12. Hierdurch greift das Betätigungselement in die Zahnreihe 26 ein, wodurch eine Rastverbindung realisiert ist.

Der Verstellmechanismus 25 ist hier als ein Verschiebe- und Verstellmechanismus ausgebildet. Hierbei ergibt sich eine Verschiebung der Grifflängenbegrenzung 11 mittels des Betätigungselementes 23. Hierbei erfolgt gleichzeitig mit dem Verschieben ein Verschwenken der Grifflängenbegrenzung 11 um die Schwenkachse 20.

Mittels des Verstellmechanismus 25 und der flexibel gestalteten Grifflängenbegrenzung 11 ist somit die Länge der Grifflängenbegrenzung 11 im Bereich der Grifföffnung 19 veränderbar. Durch die verschieden einstellbaren Längen der Grifflängenbegrenzung 11 sind somit verschiedene Griffgrößenstellungen kontinuierlich einstellbar.

So ist der Fig. 3a eine maximale Griffgrößenstellung zu entnehmen, bei der die Grifflängenbegrenzung 11 in das Greifteil 12 und den Griffbügel 15 integriert ist. Das Bedienelement 23 befindet sich an einem unteren Ende der Zahnreihe 26.

In der Fig. 3b befindet sich die Grifflängenbegrenzung 11 in einer minimalen Griffgrößenstellung. Hier ist das Bedienelement 23 an einem oberen Ende der Zahnreihe 26.

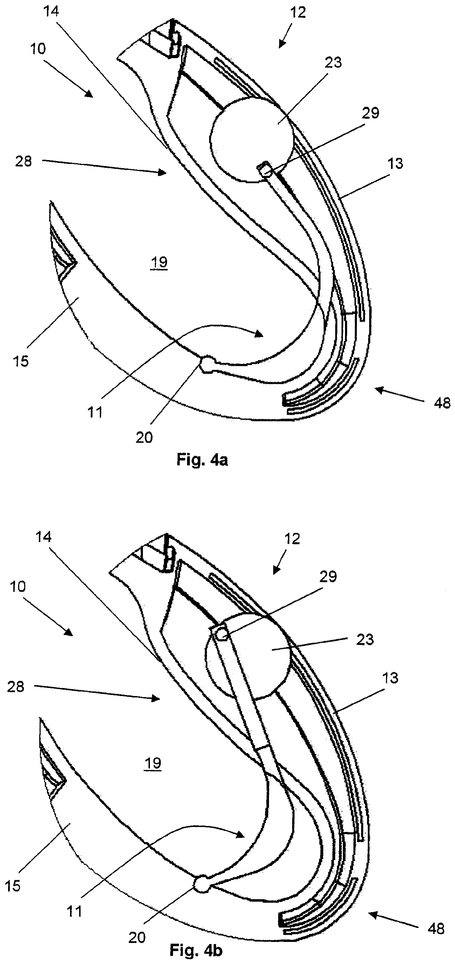

Fig. 4a und 4b zeigen geschnittene Seitendarstellungen eines vierten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

In dem hier gezeigten Ausführungsbeispiel ist die Grifflängenbegrenzung 11 starr ausgeführt. Ein Verstellmechanismus 28 ist in den Greifteil 12 integriert. Hierbei ist ein erstes Ende der Grifflängebegrenzung 11 in das Greifteil 12 eingeführt.

Weiter ist ein Betätigungselement 23 in dem Greifteil 12 angeordnet, wobei das Betätigungselement 23 in dem hier gezeigten Ausführungsbeispiel als drehbare Drehscheibe ausgebildet. Eine Betätigungsfläche ist hier als eine Umfangsfläche des Betätigungselementes 23 mindestens teilweise im Bereich der Handflächengreifseite 13 zum Betätigen des Betätigungselementes 23 frei zugänglich. Das erste Ende der Grifflängenbegrenzung 11 ist außerhalb des Mittelpunktes des Bedienelementes 23 bzw. exzentrisch und um eine Drehachse 29 drehbar mit dem Betätigungselement 23 verbunden.

Ein von dem ersten Ende der Grifflängenbegrenzung 11 abgewandtes zweites Ende ist dem Griffbügel 15 zugeordnet. Hierbei ist das zweite Ende bzw. die Grifflängenbegrenzung 11 um eine dem Griffbügel 15 zugeordnete Schwenkachse 20 verschwenkbar.

Somit ermöglicht der Verstellmechanismus 28 kontinuierlich verstellbare Griffgrößenstellungen. Hierbei ist der Verstellmechanismus 28 als ein Verschwenkmechanismus ausgebildet.

Fig. 4a zeigt eine maximale Griffgrößenstellung, bei der die Drehachse 29 dem Übergangsbereich 48 vom Greifteil 12 zum Griffbügel 15 zugewandt ist. Dieser Übergangsbereich 48 ist im Gebrauch einer Handkante und/oder einem kleinen Finger der den Griff 10 bzw. das Greifteil 12 haltenden Hand zugeordnet. Hierbei ist die Grifflängenbegrenzung 11 an diesen Übergangsbereich 48 formschlüssig angelegt.

Fig. 4b ist dagegen eine minimale Griffgrößenstellung zu entnehmen, bei der die Drehachse 29 von dem Übergangsbereich 48 vom Greifteil 12 zum Griffbügel 15 abgewandt ist. Hier ist die Grifflängenbegrenzung 11 im Vergleich zu Fig. 4a um die Schwenkachse 20 vom Übergangsbereich 48 weg verschwenkt.

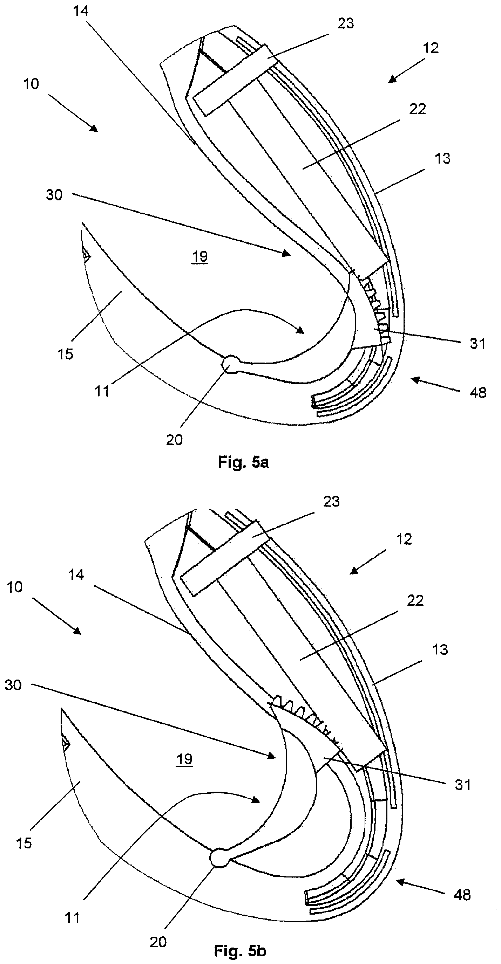

Fig. 5a und 5b zeigen geschnittene Seitendarstellungen eines fünften erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Ein Verstellmechanismus 30 ist in dem Greifteil 12 angeordnet. Der Verstellmechanismus 30 hat eine Spindel 22, die drehbar innerhalb des Greifteils 12 gelagert und bezüglich der Längsachse der Spindel 22 in Richtung bzw. etwa parallel zur Längsausrichtung des Greifteils 12 ausgerichtet ist. Die Spindel 22 ist mit einem Betätigungselement 23 fest verbunden, das hier - vergleichbar mit der Ausführung gemäß Fig. 2a und 2b - als ein Drehrad bzw. ein Rändelrad ausgebildet ist. Eine Drehachse des Betätigungselementes 23 ist parallel zur Längsachse der Spindel 22 ausgerichtet. Das Betätigungselement 23 ist an einem von der Grifflängenbegrenzung 11 abgewandten Ende an der Spindel 22 angeordnet. Hierbei ist das Betätigungselement 23 derart in das Greifteil 12 integriert, dass in dem hier gezeigten Ausführungsbeispiel eine Betätigungsfläche des Bedienelementes 23, hier eine Umfangsfläche des Rändelrades, mindestens teilweise im Bereich der Handflächengreifseite 13 frei zugänglich ist. Das Bedienelement 23 ist im Gebrauch bequem mittels eines Daumens betätigbar. Alternativ oder zusätzlich kann die Betätigungsfläche auch an einer Seitenfläche und/oder der Fingergreifseite 14 des Greifteils 12, beispielsweise zum Betätigen mit einem Finger, mindestens teilweise frei zugänglich sein.

In dem hier gezeigten Ausführungsbeispiel ist die Grifflängenbegrenzung 11 erneut starr ausgebildet. Ein erstes Ende der Grifflängenbegrenzung 11 ist in das Greifteil 12 eingeführt und weist einen Zahnkamm 31 auf. Der Zahnkamm 31 greift mindestens teilweise in die Spindel 22 ein. Ein von dem ersten Ende der Grifflängenbegrenzung 11 abgewandtes zweites Ende ist - vergleichbar zur Ausführung gemäß Fig. 4a und 4b - dem Griffbügel 15 zugeordnet. Hierbei ist das zweite Ende bzw. die Grifflängenbegrenzung 11 um eine dem Griffbügel 15 zugeordnete Schwenkachse 20 verschwenkbar.

Bei einer Betätigung des Verstellmechanismus 30, der hier als ein Verschwenkmechanismus ausgebildet ist, wird über eine Drehung des Betätigungselementes 23 zugleich die Spindel 22 gedreht. Hierdurch ist die Grifflängenbegrenzung 11 aufgrund des Zusammenwirkens des Zahnkamms 31 mit der Spindel 22 um die Schwenkachse 20 verschwenkbar. Somit sind verschiedene Griffgrößenstellungen kontinuierlich einstellbar.

Gemäß Fig. 5a ist eine maximale Griffgrößenstellung gezeigt, bei der die Grifflängenbegrenzung 11 an dem Übergangsbereich 48 vom Greifteil 12 zum Griffbügel 15 anliegt. Dieser Übergangsbereich 48 ist im Gebrauch einer Handkante und/oder einem kleinen Finger der den Griff 10 bzw. das Greifteil 12 haltenden Hand zugeordnet. Nach Fig. 5b ist eine minimale Griffgrößenstellung gezeigt, bei der die Grifflängenbegrenzung 11 im Vergleich zu Fig. 5a um die Schwenkachse 20 vom Übergangsbereich 48 weg verschwenkt ist.

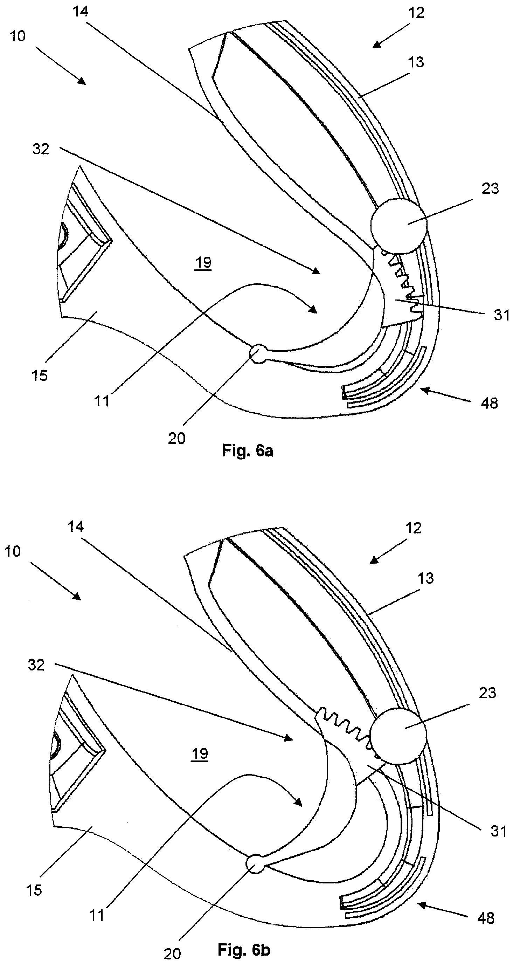

Fig. 6a und 6b zeigen geschnittene Seitendarstellungen eines sechsten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Die Grifflängenbegrenzung 11 ist hier entsprechend der Ausführung gemäß Fig. 5a und 5b ausgebildet und weist demnach ein erstes Ende mit einem Zahnkamm 31 und ein zweites Ende mit einer Schwenkachse 20 auf.

Das Betätigungselement 23 ist hier ebenfalls als ein Drehrad bzw. ein Rändelrad ausgebildet. Das Betätigungselement 23 ist derart in dem Greifteil 12 integriert, dass in dem hier gezeigten Ausführungsbeispiel eine Betätigungsfläche des Bedienelementes 23, hier eine Umfangsfläche des Rändelrades, mindestens teilweise im Bereich der Handflächengreifseite 13 frei zugänglich ist. Jedoch ist die Achse des Betätigungselementes 23 in dem hier gezeigten Ausführungsbeispiel parallel zur Schwenkachse 20 angeordnet. Der Zahnkamm 31 greift in ein hier nicht näher dargestelltes Zahnradelement des Betätigungselementes 23 ein und wirkt mit diesem zusammen. Hierdurch ist die Grifflängenbegrenzung 11 unmittelbar mit dem Betätigungselement 23 betätigbar. Eine Spindel ist verzichtbar.

Bei einer Betätigung des Verstellmechanismus 32, der hier ebenfalls als ein Verschwenkmechanismus ausgebildet ist, ist die Grifflängenbegrenzung 11 über eine Drehung des Betätigungselementes 23 und aufgrund des Zusammenwirkens des Zahnkamms 31 mit dem Betätigungselement 23 um die Schwenkachse 20 verschwenkbar. Somit sind verschiedene Griffgrößenstellungen kontinuierlich einstellbar.

Gemäß Fig. 6a ist eine maximale Griffgrößenstellung gezeigt, bei der die Grifflängenbegrenzung 11 an dem Übergangsbereich 48 vom Greifteil 12 zum Griffbügel 15 anliegt. Dieser Übergangsbereich 48 ist im Gebrauch einer Handkante und/oder einem kleinen Finger der den Griff 10 bzw. das Greifteil 12 haltenden Hand zugeordnet.

Nach Fig. 6b ist eine minimale Griffgrößenstellung gezeigt, bei der die Grifflängenbegrenzung 11 im Vergleich zu Fig. 6a um die Schwenkachse 20 vom Übergangsbereich 48 weg verschwenkt ist.

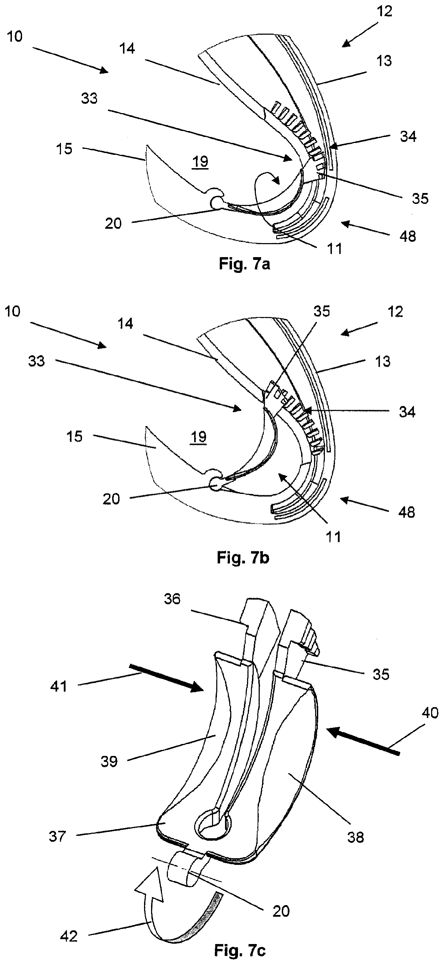

Fig. 7a und 7b zeigen geschnittene Seitendarstellungen eines siebten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Ein als Verschwenkmechanismus ausgebildeter Verstellmechanismus 33 ist in dem hier gezeigten Ausführungsbeispiel dem Greifteil 12 zugeordnet. Dabei weist der Verstellmechanismus 33 eine Rastleiste 34 auf, die in dem Greifteil 12 eingelassen ist. Die Rastleiste 34 wirkt mit Rastteilen 35, 36 zusammen, die einem dem Greifteil 12 zugewandten Ende der Grifflängenbegrenzung 11 zugeordnet sind.

Ein von dem ersten Ende der Grifflängenbegrenzung 11 abgewandtes zweites Ende hat eine Schwenkachse 20, die dem Griffbügel 15 zugeordnet ist.

Fig. 7a ist eine maximale Griffgrößenstellung zu entnehmen, bei der die Grifflängenbegrenzung 11 an dem Übergangsbereich 48 vom Greifteil 12 zum Griffbügel 15 anliegt. Dieser Übergangsbereich 48 ist im Gebrauch einer Handkante und/oder einem kleinen Finger der den Griff 10 bzw. das Greifteil 12 haltenden Hand zugeordnet.

Gemäß Fig. 7b ist eine minimale Griffgrößenstellung gezeigt, bei der die Grifflängenbegrenzung 11 im Vergleich zu Fig. 7a um die Schwenkachse 20 vom Übergangsbereich 48 weg verschwenkt ist.

Die Funktionsweise des Verstellmechanismus 33 ergibt sich in Kombination der Fig. 7a und 7b mit den folgenden Ausführungen zu Fig. 7c.

Fig. 7c zeigt eine perspektivische Seitendarstellung der Grifflängenbegrenzung 11 in der Ausführungsform gemäß Fig. 7a und 7b. Gleiche Merkmale wie zuvor tragen die gleichen Bezugszeichen. Insoweit wird auch auf die vorangegangene Beschreibung verwiesen.

Die Grifflängenbegrenzung 11 hat in dem hier gezeigten Ausführungsbeispiel einen Grundkörper 37, der U-förmig ausgebildet ist. Als Schenkel des U-förmigen Grundkörpers 37 hat dieser zwei Flügel 38, 39. An dem jeweils freien Ende des Flügels 38, 39 ist ein Rastteil 35 bzw. 36 angeordnet. Die Flügel 38, 39 und damit die Rastteile 35, 36 sind gemäß der Pfeile 40, 41 elastisch aufeinander zu bewegbar.

Zum Verstellen der Griffgröße zum Anpassen an eine Handbreite werden zunächst die Flügel 38, 39 mittels Finger und Daumen einer Hand im Sinne der Pfeile 40, 41 aufeinander zu bewegt. Hierdurch werden zugleich auch die Rastteile 35, 36 aufeinander zu bewegt, wodurch diese aus dem Eingriff mit der Rastleiste 34 kommen. Sodann ist die Grifflängenbegrenzung 11 beispielsweise gemäß Pfeil 42 oder in eine zu Pfeil 42 entgegen gesetzte Richtung um die Schwenkachse 20 verschwenkbar. Ist die gewünschte Rastposition erreicht, werden die Flügel 38, 39 losgelassen. Hierdurch kehren die Flügel 38, 39 in ihre Ursprungslage gemäß Fig. 7c zurück. Zugleich bewegen sich die Rastteile 35, 36 voneinander weg und greifen in die Rastleiste 34 ein. Abhängig von der Gestaltung der Rastleiste 34 sind mit dem Verstellmechanismus 33 diskontinuierliche bzw. konkrete, vorgegebene Griffgrößeneinstellungen realisierbar.

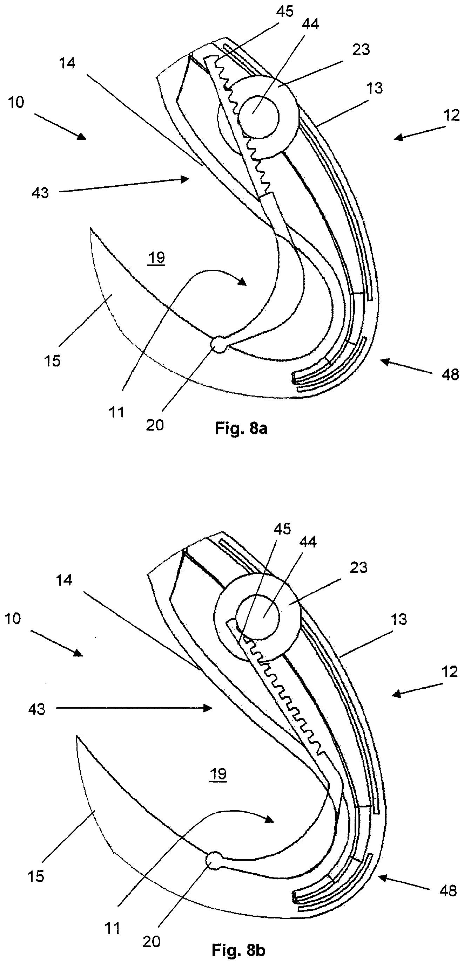

Fig. 8a und 8b zeigen geschnittene Seitendarstellungen eines achten erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Ein Verstellmechanismus 43, der als ein Verschwenkmechanismus ausgebildet ist, ist in dem hier gezeigten Ausführungsbeispiel ebenfalls dem Greifteil 12 zugeordnet. Hierbei ist ein Betätigungselement 23 vorgesehen, dass als ein Drehrad bzw. Rändelrad ausgebildet ist. Eine Drehachse des Betätigungselementes 23 ist rechtwinklig zu einer Ebene ausgerichtet, die durch das Greifteil 12 und den Griffbügel 15 aufgespannt ist. Das Betätigungselement 23 ist derart in dem Greifteil 12 positioniert, dass eine Umfangsfläche des Betätigungselementes 23 als eine Bedienfläche mindestens teilweise im Bereich der Handflächengreifseite 13 frei zugänglich ist. Hierdurch ist eine Betätigung des Betätigungselementes 23 beispielsweise mit einem Daumen ermöglicht. Konzentrisch zum Betätigungselement 23 ist ein Zahnrad 44 mit dem Betätigungselement 23 verbunden. Hierbei ist die Lage der Drehachse des Betätigungselementes 23 identisch mit der Lage der Drehachse des Zahnrades 44. In dem hier gezeigten Ausführungsbeispiel hat das Zahnrad 44 einen kleineren Radius als das Betätigungselement 23.

Ein erstes Ende der Grifflängenbegrenzung 11 ist in das Greifteil 12 eingeführt und weist eine Zahnschiene 45 auf. Die Zahnschiene 45 greift in das Zahnrad 44 ein und wirkt somit mit diesem zusammen. Ein von dem ersten Ende abgewandtes zweites Ende der Grifflängenbegrenzung 11 hat eine Schwenkachse 20, die dem Griffbügel 15 zugeordnet ist.

Bei einer Betätigung des Betätigungselementes 23 dreht sich zugleich das mit diesem verbundene Zahnrad 44. Mittels des Zahnrads 44 ist die Zahnschiene 45 in Längsrichtung des Greifteils 12 verschiebbar bzw. bewegbar.

Somit ist bei einer Betätigung des Verstellmechanismus 43 die Grifflängenbegrenzung 11 über eine Drehung des Betätigungselementes 23 und aufgrund des Zusammenwirkens des Zahnrads 44 mit der Zahnschiene 45 um die Schwenkachse 20 verschwenkbar. Somit sind verschiedene Griffgrößenstellungen kontinuierlich einstellbar.

Gemäß Fig. 8a ist eine minimale Griffgrößenstellung gezeigt, bei der die Grifflängenbegrenzung 11 um die Schwenkachse 20 vom Übergangsbereich 48 des Greifteils 12 zum Griffbügel 15 weg verschwenkt ist. Dieser Übergangsbereich 48 ist im Gebrauch einer Handkante und/oder einem kleinen Finger der den Griff 10 bzw. das Greifteil 12 haltenden Hand zugeordnet.

Nach Fig. 8b ist eine maximale Griffgrößenstellung gezeigt, bei der die Grifflängenbegrenzung 11 an dem Übergangsbereich 48 vom Greifteil 12 zum Griffbügel 15 anliegt.

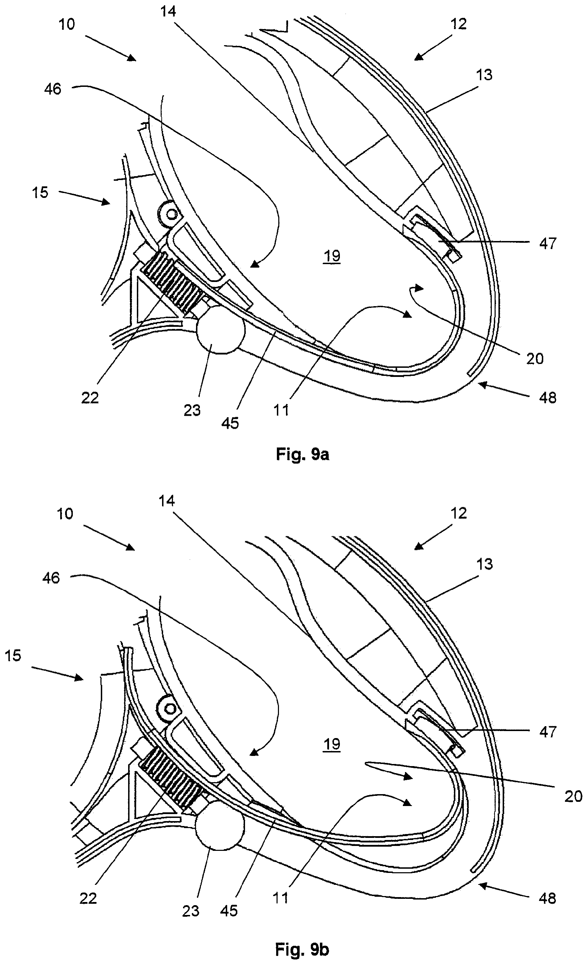

Fig. 9a und 9b zeigen geschnittene Seitendarstellungen eines weiteren erfindungsgemäßen Griffs 10 mit unterschiedlichen Griffgrößenstellungen einer Grifflängenbegrenzung 11. Gleiche Merkmale wie zuvor tragen die gleichen Bezugszeichen. Insoweit wird auch auf die vorangegangene Beschreibung verwiesen.

Ein Verstellmechanismus 46 ist in dem hier gezeigten Ausführungsbeispiel dem Griffbügel 15 zugeordnet. An einer von der Fingergreifseite 14 abgewandten Seite des Griffbügels 15 ist ein Betätigungselement 23 vorgesehen, das hier kugelförmig ausgebildet ist.

Das Betätigungselement 23 ist fest mit einem ersten Ende einer Spindel 22 verbunden. Die Spindel 22 ist drehbar in dem Griffbügel 15 gelagert.

Die Grifflängenbegrenzung 11 ist mit einem ersten Ende dem Greifteil 12 zugeordnet, wobei das erste Ende mittels einer Befestigung 47 im Bereich der Fingergreifseite 14 fest mit dem Greifteil 12 verbunden. Ein von dem ersten Ende abgewandtes zweites Ende der Grifflängenbegrenzung 11 ist in den Griffbügel 15 eingeführt und hat eine Zahnschiene 45. Die bei diesem Ausführungsbeispiel flexibel ausgebildete Zahnschiene 45 greift im Bereich der Spindel 22 in die Spindel 22 ein und wirkt mit dieser zusammen.

Bei einer Betätigung des Betätigungselementes 23 dreht sich zugleich die mit diesem verbundene Spindel 22. Mittels der Spindel 22 ist die Zahnschiene 45 innerhalb des Griffbügels 15 verschiebbar bzw. bewegbar. Somit ist bei einer Betätigung des Verstellmechanismus 46 die Grifflängenbegrenzung 11 über eine Drehung des Betätigungselementes 23 und aufgrund des Zusammenwirkens der Spindel 22 mit der Zahnschiene 45 um eine Schwenkachse 20 verschwenkbar.

Mittels des Verstellmechanismus 46 und der flexibel gestalteten Grifflängenbegrenzung 11 ist die Länge der Grifflängenbegrenzung 11 im Bereich der Grifföffnung 19 veränderbar. Durch die verschieden einstellbaren Längen der Grifflängenbegrenzung 11 sind somit verschiedene Griffgrößenstellungen kontinuierlich einstellbar. Hierbei ist die Schwenkachse 20 in dem hier gezeigten Ausführungsbeispiel nicht materiell, sondern virtuell ausgebildet und liegt im Bereich einer Befestigung 47 für die Grifflängenbegrenzung im Bereich des Griffbügels 15.

Der Verstellmechanismus 46 ist in dem hier gezeigten Ausführungsbeispiel als ein Verschiebe- und Verstellmechanismus ausgebildet. Hierbei erfolgt eine Verschiebung mittels des Betätigungselementes 23 in Zusammenwirkung mit der Spindel 22 und der Zahnschiene 45. Gleichzeitig erfolgt eine Verschwenkung um die Schwenkachse 20.

Fig. 9a ist eine maximale Griffgrößenstellung zu entnehmen, bei der die in dieser Ausführungsform flexibel ausgebildete Grifflängenbegrenzung 11 an dem Übergangsbereich 48 vom Greifteil 12 zum Griffbügel 15 anliegt. Dieser Übergangsbereich 48 ist im Gebrauch einer Handkante und/oder einem kleinen Finger der den Griff 10 bzw. das Greifteil 12 haltenden Hand zugeordnet.

Gemäß Fig. 9b ist eine minimale Griffgrößenstellung gezeigt, bei der die Grifflängenbegrenzung 11 im Vergleich zu Fig. 9a um eine Schwenkachse 20 vom Übergangsbereich 48 weg verschwenkt ist. Hierbei ist die Schwenkachse 20 dem Greifteil 12 zugeordnet.

Sämtliche Griffe 10, wie zu Fig. 1a bis 9b vorhergehend beschrieben, können als ein integraler Bestandteil mit einem Gehäuse ausgebildet sein.

Beispielsweise kann der Griff 10 in einem Gehäuse einer Leineneinrichtung integriert sein. Die Leineneinrichtung kann zum Aufrollen und Abrollen einer Leine vorgesehen sein. Hierbei dient die Leine bzw. die Leineneinrichtung zum Führen eines Tieres, wie beispielsweise eines Hundes oder einer Katze. Hierzu kann die Leine innerhalb des Gehäuses auf einer Leinenrolle geführt und mittels einer Leinenöffnung aus dem Gehäuse herausführbar sein. Zum Stoppen des Abrollvorganges und damit zum Begrenzen der abgerollten Leinenlänge kann eine Bremstaste vorgesehen sein.

**Bezugszeichenliste:**

| | | | |
|---|---|---|---|
| 10 | Griff | 46 | Verstellmechanismus |
| 11 | Grifflängenbegrenzung | 47 | Befestigung |
| 12 | Greifteil | 48 | Übergangsbereich |
| 13 | Handflächengreifseite | 49 | Anschlag |
| 14 | Fingergreifseite | | |
| 15 | Griffbügel | | |
| 16 | Verstellmechanismus | | |
| 116 | Verstellmechanismus | | |
| 17 | Erstes Rastelement | | |
| 117 | weiteres erstes Rastelement | | |
| 18 | Zweites Rastelement | | |
| 118 | weiteres zweites Rastelement | | |
| 19 | Grifföffnung | | |
| 20 | Schwenkachse | | |
| 21 | Verstellmechanismus | | |
| 22 | Spindel | | |
| 23 | Betätigungselement | | |
| 24 | Spindelmutter | | |
| 25 | Verstellmechanismus | | |
| 26 | Zahnreihe | | |
| 27 | Öse | | |
| 28 | Verstellmechanismus | | |
| 29 | Drehachse | | |
| 30 | Verstellmechanismus | | |
| 31 | Zahnkamm | | |
| 32 | Verstellmechanismus | | |
| 33 | Verstellmechanismus | | |
| 34 | Rastleiste | | |
| 35 | Rastteil | | |
| 36 | Rastteil | | |
| 37 | Grundkörper | | |
| 38 | Flügel | | |
| 39 | Flügel | | |
| 40 | Pfeil | | |
| 41 | Pfeil | | |
| 42 | Pfeil | | |
| 43 | Verstellmechanismus | | |
| 44 | Zahnrad | | |
| 45 | Zahnschiene | | |

## Patentansprüche

1. Griff zum Ergreifen mit einer Hand, insbesondere zum Halten einer Leineneinrichtung zum Aufrollen und Abrollen einer Leine zum Führen eines Tieres, mit einem starren Greifteil (12), **dadurch gekennzeichnet, dass** eine verstellbare Grifflängenbegrenzung (11) zum Einstellen einer Grifflänge für unterschiedliche Handbreiten vorgesehen ist, und dass ein mit dem Greifteil (12) verbundener, einstückig mit dem Greifteil (12) ausgebildeter Griffbügel (15) vorgesehen ist, wobei der Griffbügel (15) und das Greifteil (12) eine Grifföffnung (19) zum mindestens teilweisen Durchführen von Fingern bilden, und die Grifflängenbegrenzung (11) innerhalb der Grifföffnung (19) angeordnet ist.

2. Griff nach Anspruch 1, **dadurch gekennzeichnet, dass** die, vorzugsweise U-förmige, Grifflängenbegrenzung (11) in Längsrichtung des Greifteils (12) mittels eines Verstellmechanismus (16, 116, 21, 25, 28, 30, 32, 33, 43, 46), insbesondere kontinuierlich und/oder diskontinuierlich, verstellbar und/oder positionierbar ist, wobei vorzugsweise der Greifteil (12) eine Handflächengreifseite (13) zum mindestens teilweisen Anlegen einer Handinnenfläche und eine Fingergreifseite (14) zum mindestens teilweisen Anlegen von Fingerinnenflächen hat.

3. Griff nach Anspruch 1 oder 2, **dadurch gekennzeichnet, dass** die Grifflängenbegrenzung (11) zum mindestens teilweisen Umgreifen eines kleinen Fingers und/oder einer Handkante an dem Greifteil (12) angeordnet ist.

4. Griff nach einem der vorhergehenden Ansprüche, **dadurch gekennzeichnet, dass** der Griffbügel (15) einer Fingergreifseite (14) des Greifteils (12) zugewandt ist.

5. Griff nach einem der vorhergehenden Ansprüche, **dadurch gekennzeichnet, dass** die Grifflängenbegrenzung (11) in einer maximalen Griffgrößenstellung mindestens teilweise in das Greifteil (12) und/oder den Griffbügel (15) integriert ist, wobei vorzugsweise die Grifflängenbegrenzung (11) zum Verkleinern der Griffgrößenstellung in Längsrichtung des Greifteils (12) verstellbar ist.

6. Griff nach einem der Ansprüche 2 bis 5, **dadurch gekennzeichnet, dass** der Verstellmechanismus (16, 116, 21, 25, 28, 30, 32, 33, 43, 46) als ein Verschiebemechanismus und/oder als ein Verschwenkmechanismus ausgebildet ist, wobei vorzugsweise bei einem Verschwenkmechanismus eine, insbesondere dem Greifteil (12) oder dem Griffbügel (15) zugeordnete und/oder mit dem Verschiebemechanismus verschiebbare, Schwenkachse (20) zum Verschwenken der Grifflängenbegrenzung (11) vorgesehen ist.

7. Griff nach einem der Ansprüche 2 bis 6, **dadurch gekennzeichnet, dass** ein Betätigungselement (23) zum Betätigen des Verstellmechanismus (16, 116, 21, 25, 28, 30, 32, 33, 43, 46) vorgesehen ist, wobei vorzugsweise das Betätigungselement (23) dem Greifteil (12), dem Griffbügel (15) oder der Grifflängenbegrenzung (11) zugeordnet ist.

8. Griff nach Anspruch 6 oder 7, **dadurch gekennzeichnet, dass** der Verschiebemechanismus und/oder der Verschwenkmechanismus einen Getriebemechanismus, Rastmechanismus und/oder einen Klippmechanismus aufweisen, wobei vorzugsweise bei einem Rastmechanismus erste Rastelemente (17, 117) und/oder eine Rastleiste (34) im Bereich des Greifteils (12) und/oder des Griffbügels (15) angeordnet sind, die insbesondere mit mindestens einem zweiten Rastelement (18, 118) und/oder Rastteilen (35, 36) der Grifflängenbegrenzung (11) zusammenwirken.

9. Griff nach einem der Ansprüche 6 bis 8, **dadurch gekennzeichnet, dass** der Verschiebemechanismus eine in dem Greifteil (12) oder in dem Griffbügel (15) angeordnete Spindel (22) aufweist, wobei vorzugsweise die Spindel (22) mittels eines Betätigungselementes (23), insbesondere eines Drehrades, zum Verstellen der mit der Spindel (22) zusammenwirkenden Grifflängenbegrenzung (11) betätigbar ist.

10. Leineneinrichtung zum Aufrollen und Abrollen einer Leine, insbesondere zum Führen eines Tieres, mit einem Griff (10) nach einem der vorhergehenden Ansprüche, wobei vorzugsweise der Griff (10) in einem Gehäuse der Leineneinrichtung integriert ist.

## Claims

1. Grip for grasping with one hand, in particular for holding a leash device for rolling up and unrolling a leash for leading an animal, having a rigid gripping part (12), **characterised in that** an adjustable grip length limitation (11) is provided for adjusting a grip length for different hand widths, and that a grip strap (15), connected to the gripping part (12), is provided that is designed as one piece with the gripping part (12), wherein the grip strap (15) and the gripping part (12) form a grip opening (19) for at least partially passing fingers through, and the grip length limitation (11) is arranged within the grip opening (19).

2. Grip according to claim 1, **characterised in that** the preferably U-shaped grip length limitation (11) is preferably continuously and/or discontinuously, adjustable and/or positionable in the longitudinal direction of the gripping part (12) by means of an adjusting mechanism (16, 116, 21, 25, 28, 30, 32, 33, 43, 46), wherein the gripping part (12) preferably has a hand surface gripping side (13) for at least partially placing a hand inner surface thereon and a finger gripping side (14) for at least partially placing finger inner surfaces thereon.

3. Grip according to claim 1 or 2, **characterised in that** the grip length limitation (11) is arranged at the gripping part (12) for at least partially encompassing a little finger and/or a hand edge.

4. Grip according to one of the preceding claims, **characterised in that** the grip strap (15) faces a finger gripping side (14) of the gripping part (12).

5. Grip according to one of the preceding claims, **characterised in that** in a maximum grip size position, the grip length limitation (11) is at least partially integrated into the gripping part (12) and/or the grip strap (15), wherein preferably the grip length limitation (11) is adjustable for reducing the grip size position in the longitudinal direction of the gripping part (12).

6. Grip according to one of claims 2 to 5, **characterised in that** the adjusting mechanism (16, 116, 21, 25, 28, 30, 32, 33, 43, 46) is designed as a displacement mechanism and/or as a pivoting mechanism, wherein preferably for a pivoting mechanism there is provided a pivot axis (20), associated in particular with the gripping part (12) or with the grip strap (15), and/or displaceable with the displacement mechanism, for pivoting the grip length limitation (11).

7. Grip according to one of claims 2 to 6, **characterised in that** an actuating element (23) is provided for actuating the adjusting mechanism (16, 116, 21, 25, 28, 30, 32, 33, 43, 46), wherein preferably the actuating element (23) is associated with the gripping part (12), the grip strap (15) or the grip length limitation (11).

8. Grip according to claim 6 or 7, **characterised in that** the displacement mechanism and/or the pivoting mechanism possess a gear mechanism, locking mechanism and/or a clipping mechanism, wherein preferably for a locking mechanism, first locking elements (17, 117) and/or a locking strip (34), which interact with at least one second locking element (18, 118) and/or locking parts (35, 36) of the grip length limitation (11), are arranged in the region of the gripping part (12) and/or the grip strap (15).

9. Grip according to one of claims 6 to 8, **characterised in that** the displacement mechanism possesses a spindle (22) arranged in the gripping part (12) or in the grip strap (15), wherein the spindle is preferably actuatable by means of an actuating element (23), in particular a rotating wheel, for adjusting the grip length limitation (11) interacting with the spindle (22).

10. Leash device for rolling up and unrolling a leash, in particular for leading an animal, having a grip (10) according to one of the preceding claims, wherein the grip (10) is preferably integrated in a housing of the leash device.

## Revendications

1. Poignée destinée à être prise d'une seule main, plus particulièrement pour la tenue d'un dispositif à laisse pour l'enroulement et le déroulement d'une laisse pour le guidage d'un animal, avec une partie de préhension rigide (12), **caractérisée en ce qu'**une limitation de longueur de poignée réglable (11) est prévue pour le réglage d'une longueur de poignée pour différentes largeurs de mains, et **en ce qu'**un étrier de poignée (15), relié avec la partie de préhension (12) et réalisé d'une seule pièce avec la partie de préhension (12), est prévu, l'étrier de poignée (15) et la partie de préhension (12) formant une ouverture de poignée (19) pour le passage au moins partiel de doigts et la limitation de longueur de poignée (11) étant disposée à l'intérieur de l'ouverture de poignée (19).

2. Poignée selon la revendication 1, **caractérisée en ce que** la limitation de longueur de poignée (11), de préférence en forme de U, peut être déplacé et/ou positionné dans la direction longitudinale de la partie de préhension (12) au moyen d'un mécanisme de réglage (16, 116, 21, 25, 28, 30, 32, 33, 43, 46), plus particulièrement de manière continue et/ou discontinue, de préférence la partie de préhension (12) comprenant un côté de préhension de paume (13) pour l'appui au moins partiel d'une paume de main et un côté de préhension de doigts (14) pour l'appui au moins partiel de surfaces internes de doigts.

3. Poignée selon la revendication 1 ou 2, **caractérisée en ce que** la limitation de longueur de poignée (11) est disposée de façon à entourer au moins partiellement un petit doigt et/ou un tranchant de la main au niveau de la partie de préhension (12).

4. Poignée selon l'une des revendications précédentes, **caractérisée en ce que** l'étrier de poignée (15) est orienté vers un côté de préhension de doigt (14) de la partie de préhension (12).

5. Poignée selon l'une des revendications précédentes, **caractérisée en ce que** la limitation de longueur de poignée (11) est intégrée, dans une position de taille de poignée maximale, au moins partiellement dans la partie de préhension (12) et/ou dans l'étrier de poignée (15), de préférence la limitation de longueur de poignée (11) étant réglable pour rétrécir la position de taille de poignée dans la direction longitudinale de la partie de poignée (12).

6. Poignée selon l'une des revendications 2 à 5, **caractérisée en ce que** le mécanisme de réglage (16, 116, 21, 25, 28, 30, 32, 33, 43, 46) est conçu comme un mécanisme de coulissement et/ou comme un mécanisme de pivotement, de préférence, dans un mécanisme de pivotement, un axe de pivotement (20), correspondant plus particulièrement à la partie de préhension (12) ou à l'étrier de poignée (15) et/ou coulissant avec le mécanisme de coulissement, est prévu pour le pivotement de la limitation de longueur de poignée (11).

7. Poignée selon l'une des revendications 2 à 6, **caractérisée en ce qu'**un élément d'actionnement (23) est prévu pour l'actionnement du mécanisme de réglage (16, 116, 21, 25, 28, 30, 32, 33, 43, 46), de préférence l'élément d'actionnement (23) correspondant à la partie de préhension (12), à l'étrier de poignée (15) ou à la limitation de longueur de poignée (11).

8. Poignée selon la revendication 6 ou 7, **caractérisée en ce que** le mécanisme de coulissement et/ou le mécanisme de pivotement comprennent un mécanisme de transmission, un mécanisme d'encliquetage et/ou un mécanisme de clipsage, de préférence, dans un mécanisme d'encliquetage, sont disposés des premiers éléments d'encliquetage (17, 117) et/ou une baguette d'encliquetage (34) au niveau de la partie de préhension (12) et/ou de l'étrier de poignée (15), qui interagissent plus particulièrement avec au moins un deuxième élément d'encliquetage (18, 118) et/ou des parties d'encliquetage (35, 36) de la limitation de longueur de poignée (11).

9. Poignée selon l'une des revendications 6 à 8, **caractérisée en ce que** le mécanisme de coulissement comprend une broche (22) disposée dans la partie de préhension (12) ou dans l'étrier de poignée (15), de préférence la broche (22) pouvant être actionnée au moyen d'un élément d'actionnement (23), plus particulièrement d'une molette, pour le réglage de la limitation de longueur de poignée (11) interagissant avec la broche (22).

10. Dispositif à laisse pour l'enroulement et le déroulement d'une laisse, plus particulièrement pour le guidage d'un animal, avec une poignée (10) selon l'une des revendications précédentes, de préférence la poignée (10) étant intégrée dans un boîtier du dispositif à laisse.
